# EUROPEAN PATENT APPLICATION

(11) **EP 3 663 654 A2**
(43) Date of publication of application: **10.06.2020**
(21) Application number: 19211569.9
(22) Date of filing: 26.11.2019
(51) Int. Cl.: F24D 19/10, G05D 23/19, H05K 5/02, H05B 1/02

(54) **CONTROL DEVICE FOR AN ELECTRIC RADIATOR**

(30) Priority: 26.11.2018 IT 201800010582
(71) Applicant: IRSAP SPA, 45031 Arqua' Polesine (RO) (IT)
(72) Inventor: ZEN, Alessandro, 45100 ROVIGO (IT); BERTASI, Giulio, 45030 OCCHIOBELLO (RO) (IT); DE PICCOLI, Nicolò, 45031 ARQUA' POLESINE (RO) (IT); SCALAMBRIN, Luca, 45031 ARQUA' POLESINE (RO) (IT)
(74) Representative: Maccagnan, Matteo

(57) **Abstract**

Control device for an electric radiator having an electric resistance, the control device (1) having a containing body (2) and a printed circuit board (28), which is arranged inside the containing body (2) and includes an electronic thermostat (29) to supply the electrical resistance in a controlled manner, and the containing body (2) having an inner shell (12), which houses the printed circuit board (28), and an outer shell (13), which wraps the inner shell (12) so as to substantially follow its shape, is externally covered with a coloured varnish and is composed of two outer half-shells (18, 19) coupled together along a symmetry plane (2a) of said containing body (2).

## Description

### CROSS-REFERENCE TO RELATED APPLICATIONS

This patent application claims priority from Italian patent application no. 102018000010582 filed on 26/11/2018.

### TECHNICAL FIELD

The present invention relates to a control device for an electric radiator.

In particular, the present invention finds advantageous, but not exclusive, application in electric radiators comprising at least one upright full of fluid and in which an electric resistance suitable for heating the fluid is inserted, to which the following description will make explicit reference without thereby losing its general character.

### STATE OF THE ART

A control device for electric radiators typically comprises a containing body, which includes a portion that can be connected to one end of the radiator upright from which the cables connecting the electrical resistance come out, and a thermostat placed inside the containing body. The containing body includes one or more openings showing command and adjustment buttons, at least one indicator light or a display to view the state of the thermostat. The containing body is normally made of a plastic material typically white in colour, or in any case of a single colour, which often does not match well with the customizable colours of the varnishes applied to the surface of the radiators.

There are manufacturers that produce control devices whose containing body can be requested in a colour selectable from a set of colours. However, this set of colours is typically limited, since the colouring is due to the mass pigmentation of a plastic material. Furthermore, the above solution has significant costs in terms of production and storage.

### OBJECT OF THE INVENTION

The object of the present invention is to provide a control device that is free from the drawbacks described above and, at the same time, is easy and inexpensive to manufacture.

In accordance with the present invention, it is provided a control device for an electric radiator as defined in the appended claims.

### BRIEF DESCRIPTION OF THE DRAWINGS

The present invention will now be described with reference to the attached drawings showing a non-limiting exemplary embodiment, in which:
- Figure 1 shows the control device of the present invention according to an axonometric view;
- Figure 2 shows the control device of Figure 1 according to a further axonometric view having a direction of view opposite to the one of Figure 1;
- Figure 3 shows a plan view from below of the control device of Figures 1 and 2;
- Figure 4 shows an exploded view of the control device of Figures 1 and 2 according to the direction of view of Figure 2; and
- Figure 5 shows an exploded view of a part of the control device of Figures 1 and 2 according to the direction of view of Figure 1.

### PREFERRED EMBODIMENT OF THE INVENTION

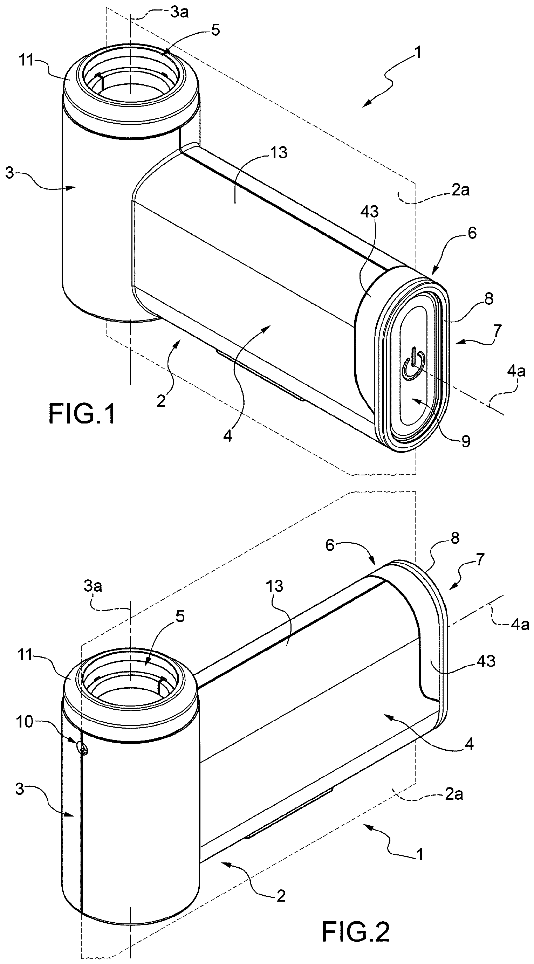

In Figures 1 and 2, 1 generally indicates, as a whole, the control device of the present invention. The control device 1 comprises a containing body 2 symmetrical with respect to a plane 2a.

The containing body 2 comprises a first portion 3, which has a substantially cylindrical shape, for example with a circular base, and extends along a first axis 3a, and a second portion 4, which has a substantially cylindrical shape, for example with an ellipse flattened base, and projects laterally from the portion 3 extending along a second axis 4a. The axis 4a is transverse to the axis 3a. The axes 3a and 4a lie on the symmetry plane 2a. Preferably, as in the example of Figures 1 and 2, the axis 4a is perpendicular to the axis 3a.

The portion 3 comprises an end opening 5 that is transverse to the axis 3a and that can be axially coupled to one end of a cylindrical upright of an electric radiator (not shown). For a better match with the shape of the upright, the end opening 5 has a circular shape. The portion 4 comprises a free axial end 6 preferably having the shape of an ellipse flattened along the minor axis. Normally, the control device 1 is mounted on a lower end of a vertical upright of the electric radiator and therefore with the end opening 5 facing upwards, as shown in Figures 1 and 2.

With particular reference to Figure 1, the control device 1 comprises an end element 7, which is arranged on the free axial end 6 and comprises an annular portion 8 visible outside the containing body 2. The control device 1 comprises an actuator element 9 working as a button, which is arranged on the free axial end 6 to be laterally surrounded by the annular portion 8.

The annular portion 8 has a front shape similar to the one of the free axial end 6, namely an ellipse flattened along the minor axis.

With particular reference to Figure 2, the portion 3 of the containing body 2 shows at the rear, namely on the side opposite with respect to the axis 3a to the one from which the portion 4 projects, a through hole 10 engageable by a screw (not shown) to secure the control device 1 to the end of the upright of the electric radiator.

The control device 1 includes an adapter ring 11 coupled to the end opening 5 to improve the aesthetic appearance of the coupling between the portion 3 and the upright of the electric radiator.

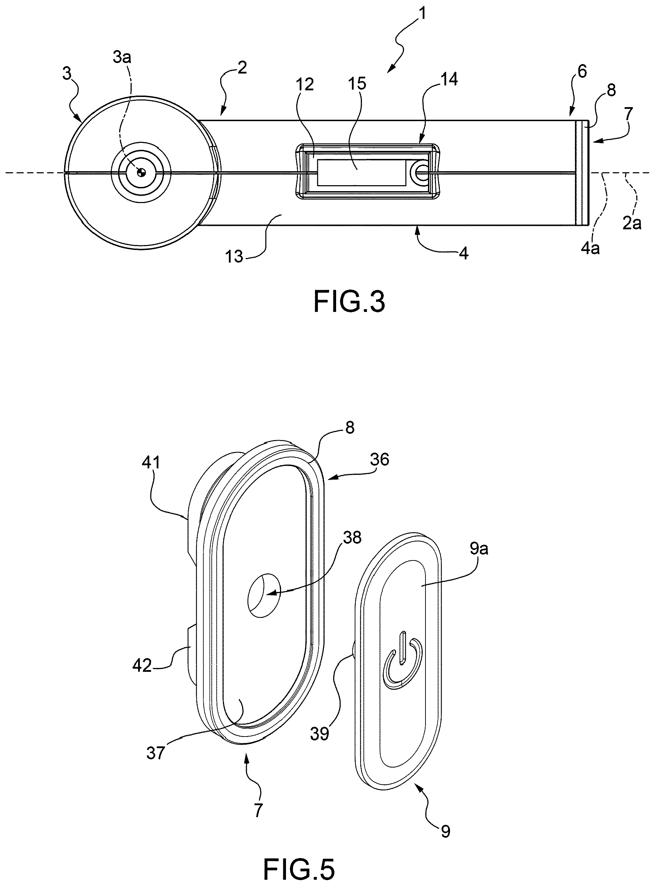

With particular reference to Figure 3, the containing body 2 comprises an inner shell 12 and an outer shell 13, which wraps the inner shell 12 so as to substantially have its shape and is externally covered with a coloured varnish. In the portion 4 of the containing body 2, the outer shell 13 comprises a window 14 showing a temperature sensor 15 mounted on the underlying inner shell 12 to measure the ambient temperature.

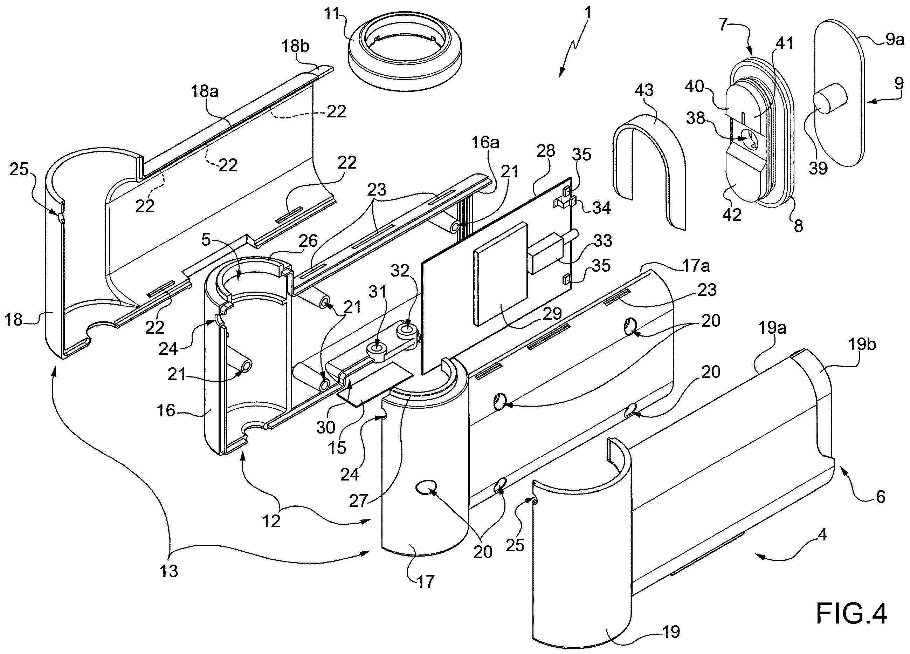

With reference to the exploded view of Figure 4, the inner shell 12 is composed of two inner half-shells 16 and 17 coupled together along the symmetry plane 2a and the outer shell 13 is composed of two outer half-shells 18 and 19, also coupled together along the symmetry plane 2a. The two inner half-shells 16 and 17 comprise respective joining edges 16a and 17a shaped so as to achieve a shape coupling, and in particular a male-female coupling. The joining edges 16a and 17a are parallel to the plane 2a. The two outer half-shells 18 and 19 comprise respective joining edges 18a and 19a, also shaped so as to achieve a shape coupling. The joining edges 18a and 19a are parallel to the plane 2a.

The two inner half-shells 16 and 17 are held together by a plurality of screws (not shown), each of which passes through a respective through hole 20 formed on a first inner half-shell 16 and is screwed into a respective threaded blind hole 21 formed in the other inner half-shell 17. Each outer half-shell 18, 19 is retained on a respective inner half-shell 16, 17 by means of teeth 22 internally projecting from the outer half-shell 18, 19 and engaged with interference in corresponding grooves 23 formed in the inner half-shell 16, 17. As shown in Figure 4, the grooves 23 are parallel to the joining edges 16a and 17a, and therefore to the plane 2a, and the teeth 22 are parallel to the joining edges 18a and 19a and therefore to the plane 2a.

The through hole 10 (Figure 2) consists of two coaxial through holes 24 and 25, wherein the first is respectively formed in the inner shell 12 and the second is respectively formed in the outer shell 13.

The through holes 24 and 25 are cut along the symmetry plane 2a since each is half made in a relative inner half-shell 16, 17 and, respectively, in a relative outer half-shell 18, 19.

The two inner half-shells 16 and 17 comprise respective edges 26 and 27, which at least partially delimit the end opening 5. In the example shown by the figures, the two edges 26 and 27 have a semicircular shape so as to define the end opening 5. The adapter ring 11 carries out the coupling with the end opening 5 by embracing the edges 26 and 27.

The control device 1 comprises a printed circuit board 28 arranged inside the containing body 2, and in particular inside the portion 4. More in detail, the inner shell 12 houses the printed circuit board 28.

The printed circuit board 28 comprises an electronic thermostat 29 designed to supply the electrical resistance of an electric radiator (not shown) in a controlled manner. The electrical resistance acts as a heating element and is normally housed in a vertical upright of the electric radiator.

The temperature sensor 15 is part of the electronic thermostat 29. The inner shell 12 comprises a seat 30 facing outwards and formed astride the two inner half-shells 16 and 17, and therefore transverse to the symmetry plane 2a, at the window 14 of the outer shell 13, to house the temperature sensor 15. In this way, the temperature sensor 15 is exposed to the outer environment and correctly measures the ambient temperature. In particular, the seat 30 comprises a hole 31 for fixing the temperature sensor 15 and a hole 32 for allowing the passage of the wires necessary to connect the temperature sensor 15 to the printed circuit board 28.

The printed circuit board 28 comprises a mechanical pushbutton switch 33 for turning the electronic thermostat 29 on and off. In addition or as an alternative to the switch 33, the printed circuit board 29 includes an IR receiver 34 for receiving IR signals (infrared) intended to control the switching on and off of the electronic thermostat 29. Furthermore, the printed circuit board 29 comprises at least one light source, and in particular two light sources 35, to signal the switching on of the electronic thermostat 29.

Figure 5 shows an exploded view of the assembly consisting of the end element 7 and of the actuator element 9, according to a direction of view opposite to the one of Figure 4.

With reference to Figure 5, the end element 7 comprises a front portion 36, which faces outwards and comprises a seat 37 surrounded by the annular portion 8 and in particular perimetrically delimited by the annular portion 8 to receive the actuator element 9, and a through hole 38 centrally formed in the seat 37. The actuator element 9 has a front portion 9a shaped to precisely fit in the seat 37, and therefore has the same flattened ellipse shape.

With reference to Figures 4 and 5, the actuator element 9 comprises a rear pin 39, which is inserted into the hole 38 until it mates with the switch 33. In this way, when a user presses the actuator element 9 with a finger, the rear pin 39 presses on the switch 33, thus switching the electronic thermostat 29 on or off, depending on the current state.

With reference again to Figure 4, the end element 7 is made of translucent material, i.e. is capable of transmitting light in a diffuse way, and comprises two upper rear portions 40 and 41 arranged side by side above the hole 38 and a lower rear portion 42 arranged below the hole 38. The rear portions 40-42 act as light guides to guide the light or infrared radiation towards and from the annular portion 8. In particular, each of the upper rear portion 40 and of the lower rear portion 42 is optically coupled to a respective light source 35. The other upper rear portion 41 is optically coupled to the IR receiver 34. In this way, the light emitted by the light sources 35 is emitted out of the containing body 2 through the annular portion 8 and the IR signals emitted by a radio control (not shown) are absorbed by the annular portion 8 to be guided to the IR receiver 34.

The containing body 2 further comprises a U-shaped insert 43, which is arranged on the outer shell 13 at the free axial end 6 so as to embrace the two outer half-shells 18 and 19 at end grooves 18b and 19b. The insert has an essentially aesthetic and identifying function: for example, it bears the trademark of the manufacturer of the control device 1.

Although the invention described above makes particular reference to a specific exemplary embodiment, it is not to be considered limited to this exemplary embodiment, since its scope comprises all those variants, modifications or simplifications covered by the attached claims, such as e.g.:
- different shapes of the cylindrical sections of the portions 3 and 4, such as, e.g. a circular shape for the portion 4 and a flattened ellipse shape for the portion 3, or a non-flattened ellipse shape for the portion 4;
- a different front pattern for the actuation element;
- a different position of the window 14 and of the corresponding temperature sensor 15 in the containing body 2;
- the absence of the insert 43; and
- the fact that inner shell 12 is not composed of the two half-shells 16 and 17, but of two or more partial shells not necessarily symmetrical with respect to the symmetry plane 2a and connected to each other.

The main advantage of the control device 1 described above is an easier chromatic customization, thanks to the presence of the outer shell, which is externally covered with a coloured varnish, whose colour can be selected based on the electric radiator on which the control device has to be mounted. The outer shell 13 is easily mountable on and removable from the inner shell 12 thanks to the plurality of teeth 22 on the outer shell 13 and the corresponding plurality of grooves 23 formed on the inner shell 12. Another advantage is the reduction in the number of parts and in the material of the device that must be coloured with the specific colour, thus reducing the cost of a single control device on large production numbers.

## Claims

1. A control device for an electric radiator comprising an electric resistance, the control device (1) comprising a containing body (2) and a printed circuit board (28), which is arranged inside the containing body (2) and comprises an electronic thermostat (29) designed to supply power to said electric resistance in a controlled manner, and being **characterized in that** said containing body (2) comprises an inner shell (12), which houses said printed circuit board (28), and an outer shell (13), which wraps the inner shell (12) so as to substantially imitate the shape thereof, is covered with a coloured varnish on the outside and is composed of two outer half-shells (18, 19) coupled together along a symmetry plane (2a) of said containing body (2).

2. A control device according to claim 1, wherein the inner shell (13) is composed of two inner half-shells (18, 19) coupled together along said symmetry plane (2a) and each of said outer half-shells (18, 19) is mounted on a respective of said inner half-shells (16, 17).

3. A control device according to claim 2, wherein each inner half-shell (16, 17) has a plurality of grooves (23) and the respective outer half-shell (18, 19) comprises a plurality of protruding teeth (22) to engage the grooves (23) with interference so that the outer half-shell (18, 19) is retained on the respective inner half-shell (16, 17) .

4. A control device according to claim 3, wherein said two inner half-shells (16, 17) comprise respective first joining edges (16a, 17a) parallel to said symmetry plane (2a) and said two outer half-shells (18, 19) comprise respective second joining edges (17a, 19a) parallel to said symmetry plane (2a); the grooves (23) being parallel to the first joining edges (16a, 17a) and the teeth (22) being parallel to the second joining edges (18a, 19a).

5. A control device according to any one of claims 1-4, wherein said containing body (2) comprises a first portion (3), which has a substantially cylindrical shape extending along a first axis (3a) and comprises an end opening (5) that is transverse to the first axis (3a) and can be coupled to one end of an upright of the electric radiator.

6. A control device according to claim 5, wherein the inner shell (12) is formed by two inner half-shells (16, 17), which are coupled together along said symmetry plane (2a) and comprise respective edges (26, 27) at least partially delimiting said end opening (5); the control device (1) comprising an adapter ring (11), which is coupled to the end opening (5) by embracing the two edges (26, 27).

7. A control device according to claim 5 or 6, wherein said containing body (2) comprises a second portion (4), which has a substantially cylindrical shape, laterally projects from said first portion (3) by extending along a second axis (4a) and has a free axial end (6); the printed circuit board (28) being arranged inside the second portion (4) and comprising a mechanical switch (33) to turn on and off said electronic thermostat (29); the control device (1) comprising an actuator element (9), which is arranged on said free axial end (6) and is coupled to said mechanical switch (33).

8. A control device according to claim 7, wherein said printed circuit board (28) comprises at least one light source (35) to signal the turning on of the electronic thermostat (29); the control device (1) comprising an end element (7), which is arranged on said free axial end (6), is made of a translucent material and comprises at least one rear portion (40-42), which is optically coupled to the light source (35) to act as light guide, and one front portion (36) facing the outside of said containing body (2) .

9. A control device according to claim 8, wherein said front portion (36) comprises a first seat (37) and an annular portion (8) surrounding said first seat (37); said end element (7) having a through hole (38) formed in the first seat (37); said actuator element (9) being arranged in said first seat (37) and comprising a rear pin (39), which is inserted into said through hole (38) to be coupled to said switch (33).

10. A control device according to any one of the claims from 7 to 9, wherein said printed circuit board (28) comprises an IR receiver (34) to receive IR signals designed to control the turning on and the turning off of said electronic thermostat (29); the control device (1) comprising an end element (7), which is arranged on said free axial end (6), is made of a translucent material and comprises a rear portion (41), which is optically coupled to the IR receiver (34) to act as light guide, and a front portion (36) facing the outside of said containing body (2) .

11. A control device according to any one of the claims from 1 to 10, wherein said electronic thermostat (29) comprises an ambient temperature sensor (15), said inner shell (12) comprises a second seat (30) facing the outside to house said ambient temperature sensor (15) and said outer shell (13) comprises a window (14) formed in the area of said second seat (30) so that the ambient temperature sensor (15) faces the outside of said containing body (2).

12. A control device according to claims 5 and 11, wherein said containing body (2) comprises a second portion (4), which has a substantially cylindrical shape, laterally projects from said first portion (3) by extending along a second axis (4a) and houses said printed circuit board (28); said second seat (30) and said window (14) being arranged in said second portion (4).
